(19) Europäisches Patentamt
European Patent Office
Office européen des brevets

(11) **EP 1 426 738 B1**

(12) **FASCICULE DE BREVET EUROPEEN**

(45) Date de publication et mention
de la délivrance du brevet:
**11.04.2007 Bulletin 2007/15**

(51) Int Cl.:
*G01D 21/00* *(2006.01)*     *G01C 13/00* *(2006.01)*
*G04G 1/00* *(2006.01)*

(21) Numéro de dépôt: **02080123.9**

(22) Date de dépôt: **05.12.2002**

(54) **Dispositif électronique et procédé comportant des moyens capacitifs de détection d'eau**

Elektronische Vorrichtung und Verfahren mit darin integriertem kapazitiven Wasserfühler

Electronic device and method incorporating capacitive water detection means

(84) Etats contractants désignés:
**AT BE BG CH CY CZ DE DK EE ES FI FR GB GR
IE IT LI LU MC NL PT SE SI SK TR**

(43) Date de publication de la demande:
**09.06.2004 Bulletin 2004/24**

(73) Titulaire: **ASULAB S.A.
2074 Marin (CH)**

(72) Inventeurs:
• **Germiquet, Christophe
2515 Prêles (CH)**
• **Berseth, Vincent
2000 Neuchâtel (CH)**
• **Born, Jean-Jacques
1110 Morges (CH)**

(74) Mandataire: **Ravenel, Thierry Gérard Louis et al
I C B
Ingénieurs Conseils en Brevets SA
Rue des Sors 7
2074 Marin (CH)**

(56) Documents cités:
**EP-A- 0 689 109**       **EP-A- 0 745 915**
**JP-U- 60 183 896**

**Description**

La présente invention concerne un dispositif électronique portable comportant des moyens d'alimentation pour alimenter des circuits électroniques comprenant notamment une unité de traitement de données, les circuits électroniques étant logés dans un ensemble formé d'un boîtier fermé par une glace, le dispositif comportant en outre un capteur de pression et des moyens de détection de la présence d'eau susceptibles de produire des signaux électriques à destination de l'unité de traitement de données, les moyens de détection comportant au moins un capteur capacitif comprenant notamment un condensateur dont une armature est constituée par une électrode agencée sur une région interne de l'ensemble boîtier-glace, la capacité de ce condensateur étant susceptible de varier suite à une modification de nature du milieu extérieur situé directement au contact d'une région externe de l'ensemble boîtier-glace en regard de ladite électrode, telle qu'une mise en contact de la région externe avec de l'eau.

La présente invention concerne également un procédé de mise en oeuvre des moyens de détection de la présence d'eau dans un tel type de dispositif.

Des dispositifs électroniques de ce type ont déjà été décrits dans l'état de la technique.

Le modèle d'utilité japonais No 60-183896, publié le 6 décembre 1985, décrit un appareil électronique équipé de moyens de mesure et d'affichage d'une profondeur d'immersion dans l'eau, comprenant en particulier un capteur de pression. Du fait de la consommation électrique élevée liée au fonctionnement du capteur de pression, des moyens de détection de la présence d'eau ont été prévus sur l'appareil pour contrôler l'alimentation du capteur de pression, afin d'interrompre cette dernière lorsque le porteur de l'appareil n'est pas dans l'eau. Dans ce but, la solution proposée consiste à utiliser un capteur capacitif comportant une électrode transparente agencée sur la face interne de la glace. Ce capteur capacitif provoque l'apparition d'une capacité lorsque de l'eau est en contact avec la glace, ce qui entraîne la modification d'un signal de référence transitant dans des circuits électroniques de traitement. Ainsi, le capteur de pression n'est alimenté en énergie que lorsque de l'eau a été détectée au contact de la glace de l'appareil.

On peut tout d'abord noter que de nombreux dispositifs sont connus dans lesquels des moyens de détection de la présence d'eau de type ohmique sont mis en oeuvre. Ces moyens de détection, bien que présentant des consommations électriques mesurées en général, comportent un inconvénient important en ce qu'ils nécessitent des constructions plus ou moins complexes. En particulier, une ouverture doit être prévue dans le boîtier du dispositif, ce qui peut poser des problèmes d'étanchéité. Pour cette raison notamment, la Demanderesse a préféré s'intéresser à l'amélioration des systèmes de détection du type capacitif qui permettent de s'affranchir de la réalisation d'une ouverture spécifique dans le boîtier du dispositif.

La solution technique présentée dans le modèle d'utilité japonais cité plus haut présente toutefois un certain nombre d'inconvénients. En particulier, il est prévu un interrupteur principal, pour contrôler l'alimentation du capteur de pression, fonctionnant en combinaison avec les moyens de détection de la présence d'eau. D'une certaine manière, les moyens de détection de la présence d'eau remplissent le rôle d'un interrupteur secondaire. La conséquence directe de la présence de l'interrupteur principal est une impossibilité d'effectuer des mesures de pression lorsque l'appareil n'est pas immergé dans l'eau, ce qui peut se révéler utile dans certains cas comme cela sera exposé plus loin. En outre, l'emplacement retenu pour agencer l'interrupteur principal est tel que les moyens de détection de la présence d'eau sont alimentés en permanence à partir d'un signal d'horloge. Ces moyens de détection sont ainsi responsables d'une perte d'énergie sur le long terme dans la mesure où un test de la présence d'eau a lieu en continu et, où la fonction d'interrupteur secondaire des moyens de coupure de l'alimentation du capteur de pression intervient en aval des moyens de détection.

On peut également noter que la solution retenue ne tient pas compte du fait que la structure décrite pour le capteur capacitif présente une capacité parasite, qui impose le choix d'une valeur relativement élevée pour la capacité formée au niveau de la glace de l'appareil, pour permettre un fonctionnement efficace des moyens de détection. Par conséquent, un inconvénient supplémentaire provient donc du fait que la consommation électrique des moyens de détection est importante du fait de la valeur élevée de la capacité. La valeur choisie pour la capacité doit être d'autant plus élevée que la valeur de la capacité parasite est susceptible de varier en fonction des conditions environnementales auxquelles est soumis l'appareil, notamment en fonction de la température. De même, la détection de la présence d'eau se faisant par détection de modifications subies par le signal de référence, et puisque l'amplitude de ces modifications varie avec la valeur de la capacité qui apparaît du fait de la présence d'eau, ladite capacité doit présenter une valeur suffisante pour rendre l'amplitude des modifications détectables par les circuits électroniques de traitement.

En outre, la valeur de la capacité parasite est susceptible de fluctuer sur le long terme ce qui peut donner lieu à un dysfonctionnement des moyens de détection, en particulier du fait que les mesures effectuées sont absolues et non comparatives.

Un premier but de la présente invention est de pallier les inconvénients susmentionnés de l'art antérieur en fournissant un appareil comportant des moyens de détection de la présence d'eau du type capacitif et présentant une faible consommation électrique, ainsi qu'une fiabilité accrue sur le long terme et dans une gamme de conditions environnementales étendue.

Dans ce but, l'invention prévoit notamment un appareil électronique portable du type indiqué plus haut, caractérisé par le fait que le capteur de pression fonctionne suivant au moins deux modes d'alimentation, un premier mode dit de surface et un second mode dit de plongée et par le fait que les moyens de détection sont activés périodiquement pour effectuer des mesures d'une grandeur représentative de la valeur de la capacité du condensateur, les moyens de détection comportant en outre des moyens pour comparer au moins deux mesures successives de cette grandeur et produire un signal électrique pour activer le mode d'alimentation de plongée en réponse à une variation entre deux mesures successives de la grandeur supérieure à une valeur prédéfinie.

Dans un mode de réalisation préféré, on prévoit une pluralité de capteurs capacitifs régulièrement répartis sur la glace du dispositif, une grandeur représentative de la capacité de chacun de ces capteurs étant mesurée à chaque période d'alimentation des moyens de détection, afin de limiter les déclenchements intempestifs du mode d'alimentation de plongée susceptibles de se produire avec un capteur unique. Les moyens de détection sont alors agencés de façon à activer le mode d'alimentation de plongée lorsqu'une partie des grandeurs mesurées, préférablement au moins la moitié voire la totalité, varient plus que la valeur prédéfinie. Une telle structure permet, en effet, d'analyser une plus grande portion de la superficie totale de la glace pour éviter, par exemple, d'activer l'alimentation du capteur de pression dès que le porteur du dispositif pose un doigt sur la glace.

De manière alternative, on peut prévoir l'agencement d'une seule électrode sur la face interne de la glace, cette électrode recouvrant sensiblement la totalité de la surface de la glace. On peut alors prévoir un seuil de déclenchement correspondant à une valeur prédéfinie pour la proportion de la glace qui est recouverte, dans la mesure où la capacité du capteur capacitif est une fonction de la surface recouverte. A titre d'exemple, on peut décider de manière arbitraire que, lorsque la valeur de la grandeur mesurée correspond au cas où la moitié de la surface totale de la glace est recouverte, on admet que le dispositif est immergé. Par conséquent, par rapport au fonctionnement du mode de réalisation principal décrit plus haut, la variation de la grandeur mesurée entre deux mesures successives doit dépasser une nouvelle valeur prédéfinie présentant une valeur plus élevée que celle du seuil prédéfini mentionné plus haut, pour permettre l'activation du mode d'alimentation de plongée.

De manière préférée, les moyens de détection de la présence d'eau selon la présente invention sont mis en oeuvre dans un dispositif du type ordinateur de plongée, ou du type montre-bracelet incorporant des fonctions dédiées à la pratique de la plongée. Dans ce dernier cas, il est souhaitable que des mesures de la pression soient effectuées régulièrement même lorsque l'utilisateur ne se trouve pas en situation de plongée. De telles mesures peuvent en effet être prises en compte dans les calculs de l'algorithme mis en oeuvre dans la montre, pour améliorer la précision dans la détermination des paramètres d'une plongée.

D'autre part, on peut envisager une utilisation supplémentaire des capteurs capacitifs lorsque le dispositif n'est pas immergé de telle manière qu'ils remplissent également une fonction d'organe de commande manuelle.

La présente invention concerne également un procédé de mise en oeuvre des moyens de détection de la présence d'eau tels que décrits ci-dessus.

L'invention sera mieux comprise à l'aide de la description suivante de différents exemples d'exécution en référence aux dessins annexés, dans lesquels :

- la figure 1 est une vue schématique en coupe transversale d'un mode de réalisation préféré du dispositif selon la présente invention;
- la figure 2 est un schéma électronique simplifié d'un exemple de réalisation des moyens de détection de la présence d'eau;
- la figure 3 est un schéma-blocs illustrant un exemple de réalisation du dispositif selon la présente invention dans un cas où les moyens de détection de la présence d'eau comportent une pluralité de capteurs capacitifs.

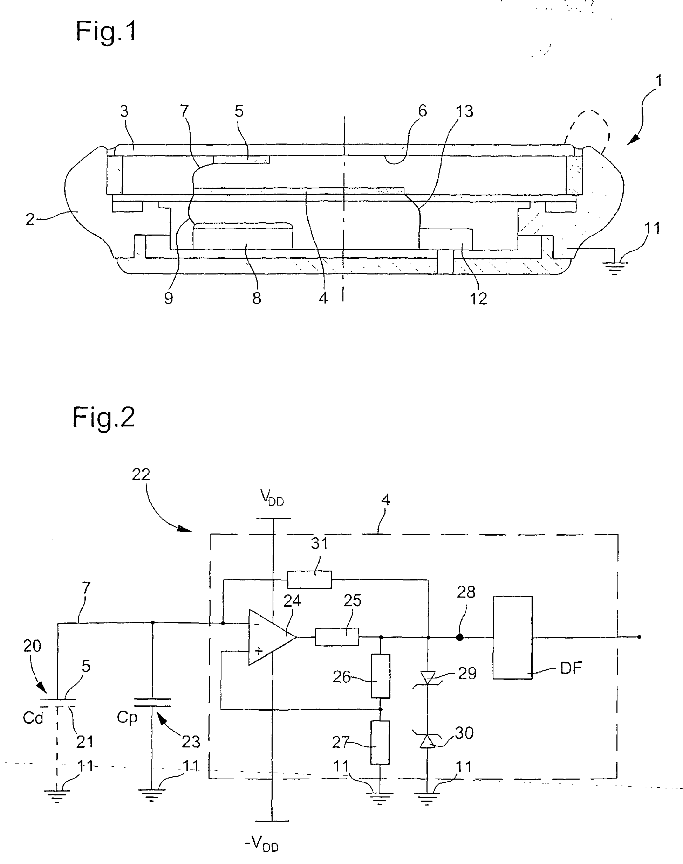

La figure 1 représente une vue en coupe d'un dispositif électronique 1, schématisé de manière non limitative sous la forme d'un dispositif du type montre-bracelet, comportant un boîtier 2 et une glace 3. Des circuits électroniques 4 sont disposés à l'intérieur du boîtier 2. Selon une structure connue de l'état de la technique, une électrode conductrice 5, de préférence transparente, est disposée sur la face interne 6 de la glace 3 du dispositif 1. L'électrode 5 est reliée aux circuits électroniques 4 par un conducteur 7. Une batterie ou autre source d'énergie électrique 8 est également disposée dans le boîtier 2 et est reliée au pôle positif des circuits électroniques 4 par un conducteur 9.

L'électrode 5 forme l'une des armatures d'un capteur capacitif 20 (schématisé sur la figure 2), l'autre armature 21 de ce capteur capacitif étant formée par l'eau recouvrant la glace 3 lorsque le dispositif 1 est immergé. L'eau permet d'établir une connexion électrique entre le boîtier 2 du dispositif 1 et la glace 3 (symbolisée par des pointillés sur la figure 1), ce qui a pour effet de ramener le potentiel de la face externe de la glace 3 à la masse 11 des circuits électroniques 4 dans la mesure où le boîtier 2 est relié au pôle négatif des circuits électroniques 4 et de la batterie 8.

Le dispositif 1 comporte en outre un capteur de pression 12, de type conventionnel logé dans son boîtier 2 et relié aux circuits électroniques 4 par un conducteur 13.

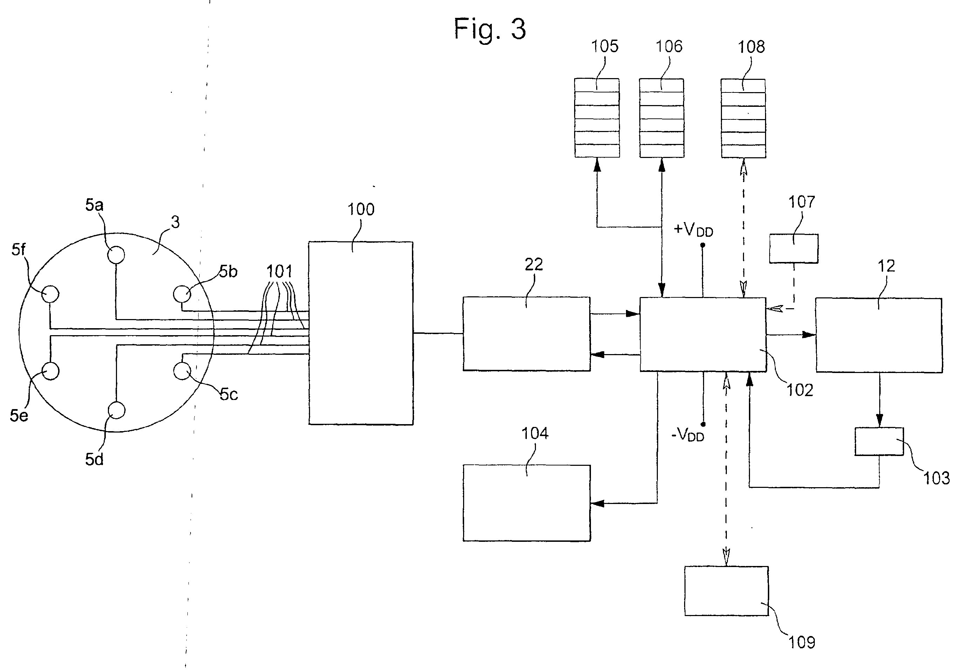

La figure 2 représente un exemple non limitatif d'un mode de réalisation préféré d'un circuit électronique de détection de la présence d'eau 22, utilisé dans le dispositif 1 de la figure 1 et, qui permet d'engendrer un signal électrique de commande en réponse à l'activation du capteur capacitif 20. Ce circuit de détection 22 est raccordé à un détecteur de fréquence DF, relié à son tour à une unité de traitement de données (schématisée sur la figure 3), qui permet de gérer le fonctionnement du capteur de pression 12 comme cela sera décrit plus loin.

Le circuit de détection 22 comprend un capteur capacitif 20 tandis qu'une capacité parasite Cp est par construction présente entre l'électrode 5 et le boîtier 2 du dispositif 1. Cette capacité parasite est représentée sur la figure 2 par un condensateur 23. Le capteur capacitif 20 et le condensateur 23 sont branchés en parallèle entre la masse 11 et l'entrée inverseuse d'un amplificateur opérationnel 24.

Le circuit de détection 22 comprend également des résistances 25, 26 et 27 reliées toutes en série entre la sortie de l'amplificateur 24 et la masse 11. L'entrée non-inverseuse de l'amplificateur 24 est reliée à une jonction entre les résistances 26 et 27. Dans cette configuration, l'amplificateur 24 et les résistances 25, 26 et 27 forment une bascule de Schmidt qui fournit à sa sortie 28, c'est-à-dire à la jonction entre les résistances 25 et 26, un signal ayant, en fonction des valeurs relatives des tensions présentes aux entrées inverseuse et non-inverseuse de l'amplificateur 24, soit un niveau logique haut soit un niveau logique bas. Deux diodes Zener 29 et 30 montées tête-bêche sont reliées entre la sortie 28 et la masse 11, afin de stabiliser les tensions définissant respectivement ces niveaux logiques.

Le circuit de détection 22 comprend en outre une résistance 31 reliée entre la sortie 28 et l'entrée inverseuse de l'amplificateur 24. Cette résistance 31 fait partie, avec le capteur capacitif 20 et le condensateur 23, d'un filtre passe-bas qui intègre la tension à la sortie de la bascule de Schmidt. Le potentiel des armatures des condensateurs 20 et 23 est appliqué à l'entrée inverseuse de l'amplificateur 24. Il en résulte que le circuit de détection 22 fonctionne comme un convertisseur tension-fréquence, autrement dit un oscillateur commandé en tension.

Dans le mode de réalisation illustré sur la figure 2, le convertisseur tension-fréquence a été conçu sous la forme d'un multivibrateur astable, car il crée un signal périodique ayant deux états quasi-stables tout en oscillant librement. Cependant, il peut également être conçu sous la forme d'un générateur quelconque de signal périodique et en particulier, comme cela a déjà été indiqué précédemment, sous la forme d'un oscillateur commandé en tension. L'agencement illustré sur la figure 2 est particulièrement avantageux en raison de sa simplicité de réalisation et du fait qu'aucun composant électronique à précision élevée n'est requis.

La période d'oscillation T du circuit de détection 22 est donnée par la relation

$$T = 2.R_{31}.C_{tot}.\ln(1 + (2.R_{26})/R_{27})$$

où $R_{31}$, $R_{26}$ et $R_{27}$ sont respectivement les valeurs des résistances 31, 26 et 27, et $C_{tot}$ est la capacité totale entre l'entrée inverseuse de l'amplificateur 24 et la masse 11. On voit donc que la fréquence d'oscillation du signal de sortie du circuit de détection est proportionnelle à l'inverse de la capacité totale $C_{tot}$ et qu'ainsi la capacité du capteur capacitif en combinaison avec la capacité parasite déterminent la valeur de la fréquence d'oscillation du circuit de détection 22.

Ainsi, la fréquence d'oscillation du convertisseur tension-fréquence varie en fonction de la présence ou de l'absence d'eau sur la face externe de la glace 3. Lorsque le dispositif 1 n'est pas immergé dans l'eau, l'armature 21 du capteur capacitif 20 est par conséquent absente du circuit montré sur la figure 2. La capacité totale est dans ce cas équivalente à la capacité parasite Cp entre l'électrode 5 et la masse 11. La fréquence d'oscillation du signal de sortie du circuit de détection 22 est alors proportionnelle à l'inverse de la capacité parasite Cp.

Par contre, lorsque le dispositif 1 est immergé dans l'eau, l'armature 21 est formée et, par conséquent, le capteur capacitif présente une capacité Cd et agit effectivement sur le circuit de détection 22. Dans ces conditions, la capacité totale $C_{tot}$ est équivalente à la somme des capacités Cd et Cp.

Ainsi, de manière connue, l'information désirée dans le signal de sortie du circuit de détection 22 est contenue dans sa fréquence et, il suffit d'utiliser ensuite des moyens numériques conçus d'une façon simple pour la récupérer. A titre d'exemple, on pourra mettre en oeuvre un compteur d'impulsions qui est mis en marche pendant une période de fonctionnement fixe. La fréquence, et donc la présence ou l'absence d'eau au contact de la glace 3, est représentée directement par le nombre d'impulsions reçues pendant cette période fixe. L'homme du métier ne rencontrera pas de difficulté particulière à mettre ces moyens ou des moyens équivalents en oeuvre, dans la mesure où ils sont connus de l'état de la technique.

La figure 3 représente, sous la forme d'un schéma-blocs, un mode de réalisation préféré pour l'ensemble des circuits électroniques du dispositif 1 selon la présente invention. Seuls les éléments ayant un rapport direct avec l'invention ont été représentés sur cette figure.

La glace 3 du dispositif 1 a été schématisée sur la figure 3, dans une configuration pour laquelle 6 capteurs capacitifs ont été prévus sur sa face interne, les électrodes 5a à 5f étant illustrées. Bien entendu, la description qui va suivre, relative à ce mode de réalisation particulier, permettra également à l'homme du métier de mettre en oeuvre une solution simplifiée dans laquelle un seul capteur capacitif est utilisé, le principe de fonctionnement général restant le même.

Chacune des 6 électrodes 5a à 5f est reliée à un circuit multiplexeur 100, de type conventionnel, via une piste conductrice 101, la sortie du circuit multiplexeur 100 étant reliée à l'entrée d'un circuit de détection 22 du type décrit en relation avec la figure 2. La sortie du circuit de détection 22 est connectée à une unité de traitement de données 102, comme mentionné précédemment, cette dernière étant également susceptible d'envoyer des instructions pour commander le circuit de détection 22.

L'unité de traitement de données 102 est alimentée par la batterie 8 du dispositif 1. L'unité de traitement 102 est reliée au capteur de pression 12 qui, à son tour, est susceptible de produire des signaux électriques de type analogique à destination d'un convertisseur analogique-numérique 103, lui-même relié à l'unité de traitement 102 pour transmettre des données numériques à cette dernière. L'unité de traitement 102 comporte également des connexions électriques avec un circuit de commande 104 de moyens d'affichage (non représentés) et deux zones mémoire 105 et 106. On constate sur la figure 3 que chacune des zones mémoires 105 et 106 a été schématisée de façon à présenter six adresses distinctes, dont les fonctions respectives seront exposées plus loin.

Les circuits électroniques du dispositif 1 disposent en outre d'une base de temps (non représentée), fournie par exemple par un résonateur à quartz, délivrant un signal d'horloge à destination de l'unité de traitement 102 et qui peut être soit intégrée directement à cette dernière, soit agencée à un autre emplacement des circuits électroniques du dispositif 1, à l'extérieur de l'unité de traitement.

Sur la base de la structure qui vient d'être décrite, on prévoit le procédé préféré suivant, pour mettre en oeuvre les moyens de détection de la présence d'eau conformément à la présente invention.

Le dispositif 1 comprend au moins deux modes de fonctionnement, à chaque mode de fonctionnement correspondant préférablement un mode d'alimentation spécifique et un mode d'affichage spécifique. Un premier mode de fonctionnement, qui peut être qualifié de mode de surface, est actif lorsque le dispositif 1 n'est pas immergé dans l'eau, tandis qu'un second mode de fonctionnement, qui peut être qualifié de mode de plongée, est activé lorsque la présence d'eau a été détectée au contact du dispositif 1.

Dans le mode de fonctionnement de surface, on peut prévoir, à titre d'exemple, des moyens de mesure de l'heure courante ainsi que son affichage par des moyens conventionnels. En outre, comme mentionné précédemment, le capteur de pression 12 est préférablement alimenté dans ce mode de fonctionnement pour effectuer des mesures périodiques de la pression environnante, avec une période prédéfinie, de valeur pouvant s'étendre de 30 minutes à 1 heure environ. Les mesures de pression sont stockées dans une mémoire dédiée (non représentée) pour être éventuellement utilisées ultérieurement, dans le cadre de la pratique de la plongée. En effet, dans le cas où le dispositif 1 selon l'invention est réalisé sous la forme d'un ordinateur de plongée, permettant notamment de calculer des paramètres de décompression, lors de la remontée d'une plongée, il est prévu de mémoriser un algorithme de décompression dans une mémoire spécifique des circuits électroniques. Cette mémoire peut éventuellement être directement agencée dans l'unité de traitement 102. Le fait de prendre en compte un historique des valeurs de la pression environnante subie par le porteur de la montre avant la plongée, dans les calculs de l'algorithme de décompression, permet d'améliorer la précision des paramètres de décompression calculés.

Bien entendu, l'homme du métier pourra choisir la valeur de la période d'alimentation du capteur de pression 12 dans le mode de surface, en fonction des caractéristiques de la batterie 8 utilisée, de la précision souhaitée pour les paramètres de décompression et de l'autonomie de fonctionnement souhaitée.

D'autre part, et toujours sur la base du signal d'horloge, l'unité de traitement de données 102 active périodiquement les moyens de détection de la présence d'eau 20, 22, 100, pour déterminer si le dispositif 1 est immergé dans l'eau ou non. Dans ce but, le circuit de détection 22 mesure successivement la capacité de chacun des capteurs capacitifs associés aux électrodes 5a à 5 f, via le multiplexeur 100, pour former une première série de mesures S1. Les grandeurs mesurées sont converties en fréquences, préférablement de la manière expliquée plus haut en rapport avec la figure 2, puis mémorisées dans une première 105 des zones mémoire 105, 106. Ainsi, chaque adresse de la zone mémoire 105 reçoit une valeur relative à un capteur capacitif 20 donné.

A la période suivante d'alimentation des moyens de détection, typiquement après 2 à 30 secondes, préférablement après environ 10 secondes, le circuit de détection 22 effectue une seconde série de mesures S2 de la capacité de chacun des capteurs capacitifs 20, via le multiplexeur 100. Cette seconde série de mesures S2 est mémorisée dans la seconde zone mémoire 106, chaque adresse de la seconde zone mémoire recevant une valeur relative à un capteur capacitif donné.

Après la mémorisation de la seconde série de mesures S2, l'unité de traitement de données 102 lit le contenu des mémoires 105 et 106 de manière séquentielle. A chaque étape de lecture, l'unité de traitement lit le contenu des adresses respectivement associées à un même capteur capacitif 20 dans chacune des zones mémoire 105 et 106, afin de calculer la variation que présente éventuellement la fréquence associée à ce capteur capacitif 20 donné, entre les deux séries de mesures S1 et S2. On prévoit alors que l'unité de traitement de données 102 calcule ensuite le taux de variation associé à cette fréquence, pour obtenir une grandeur susceptible d'être comparée ultérieurement à d'autres valeurs, en particulier à une valeur de référence prédéfinie par le constructeur du dispositif et qui se situe typiquement autour de 10 %. Ces opérations sont effectuées successivement pour toutes les adresses mémoire, de manière à calculer le taux de variation de la fréquence associée à chacun des six capteurs capacitifs. Chacune des valeurs obtenues pour les taux de variations respectifs est comparée à la valeur de référence, cette dernière définissant un seuil de déclenchement.

La série suivante des mesures de fréquence effectuée, à la période d'alimentation suivante, est mémorisée dans la première zone mémoire 105, en remplacement de la première série de mesures, pour permettre sa comparaison avec la seconde série, et ainsi de suite.

La mémorisation de chaque nouvelle série de mesures est donc toujours effectuée de telle manière que la nouvelle série remplace la série la plus ancienne précédemment mémorisée dans la zone mémoire correspondante. De ce fait, la comparaison se fait toujours entre une nouvelle série de mesures et la série de mesures précédente, ces deux séries étant séparées temporellement d'une période d'alimentation des moyens de détection.

Un critère est prévu, pour permettre une validation ou non de la présence d'eau sur la base des mesures effectuées, en fonction du nombre ou de la proportion des capteurs capacitifs 20 dont la variation de la fréquence associée a dépassé la valeur de référence entre deux séries de mesures consécutives.

A titre d'exemple, on peut prévoir que la validation de la présence d'eau au contact du dispositif 1 est effectuée lorsque l'ensemble des fréquences respectivement associées aux capteurs capacitifs 20 a franchi le seuil de déclenchement.

On peut toutefois prévoir, selon une variante de réalisation préférée, que la présence d'eau est validée lorsqu'une partie, par exemple la moitié au moins, des fréquences mesurées ont varié de manière à franchir le seuil de déclenchement, plutôt que la totalité.

En effet, lors d'une immersion du dispositif dans l'eau toutes les grandeurs respectivement associées aux capteurs capacitifs subissent normalement une variation dépassant le seuil de déclenchement prédéfini, à moins par exemple que l'utilisateur touche inopinément l'un des capteurs capacitifs pendant la série de mesures effectuée immédiatement avant l'immersion. Dans ce cas, la série de mesures précédant l'immersion est mémorisée avec un capteur capacitif présentant une valeur de capacité correspondant à un état activé, tandis que la série de mesures suivante, effectuée alors que le dispositif est immergé dans l'eau, est mémorisée avec tous les capteurs capacitifs présentant un état activé. Ainsi, les taux de variations respectivement associés aux capteurs capacitifs et calculés sur la base de ces deux séries de mesures présentent des valeurs supérieures à la valeur du seuil de déclenchement prédéfini pour tous les capteurs capacitifs à l'exception de celui qui était activé avant l'immersion.

Dans ce cas, la grandeur mesurée ne franchit pas le seuil de détection pour un des capteurs capacitifs et la présence d'eau n'est pas validée si le critère de validation de la présence d'eau retenu correspond à l'activation simultanée de tous les capteurs capacitifs. Le fait de définir un critère de validation plus souple, comme par exemple valider la présence d'eau lorsqu'au moins la moitié des capteurs capacitifs sont activés, permet de rendre plus fiable la détection de la présence d'eau.

Par ailleurs, comme cela a déjà été mentionné plus haut, la capacité d'un capteur capacitif donné est susceptible de fluctuer lentement au cours du temps, du fait des variations des conditions environnementales, et la méthode de calcul par comparaison de mesures successives, retenue dans la présente invention, permet de s'affranchir d'erreurs de calculs provenant de ces fluctuations.

Lorsque le seuil de déclenchement est franchi simultanément, c'est-à-dire lors d'une même série de mesures, par tous les capteurs capacitifs 20 ou par une partie d'entre eux suivant le critère de validation retenu, l'unité de traitement de données 102 modifie le régime d'alimentation du capteur de pression 12. Le régime d'alimentation de plongée est activé, au cours duquel la fréquence des mesures de la pression environnante effectuées par le capteur de pression 12 est bien plus grande que dans le mode d'alimentation de surface. On peut par exemple prévoir que la fréquence des mesures de la pression environnante est de l'ordre d'une mesure par seconde, voire plus d'une mesure par seconde.

Les mesures de la pression environnante transitent vers l'unité de traitement de données 102 via le convertisseur analogique-numérique 103 pour être exploitées, soit directement par l'unité de traitement 102, soit par un circuit intégré additionnel (non représenté) relié à l'unité de traitement, sur la base de l'algorithme de décompression. Ces calculs permettent de définir, de manière connue et à titre d'exemple non limitatif, des paramètres de décompression à l'intention du porteur du dispositif dans le cadre de la pratique de la plongée. Des signaux sont alors produits par l'unité de traitement 102, ou éventuellement par le circuit intégré additionnel, à destination des circuits de commande 104 des moyens d'affichage, pour afficher notamment la profondeur de la plongée en cours et divers paramètres de décompression. Ces paramètres de décompression peuvent par exemple comprendre la durée restante pour la plongée en cours avant que le porteur du dispositif ne soit obligé d'effectuer des paliers de décompression lors de la remontée, ou des données relatives à d'éventuels paliers de décompression à respecter à la remontée.

L'homme du métier ne rencontrera pas de difficulté particulière pour trouver un compromis entre une meilleure précision des calculs effectués par l'algorithme de décompression, du fait d'une fréquence de mesures de pression élevée, et une consommation limitée du capteur de pression, pour maintenir une autonomie raisonnable au dispositif 1.

On peut bien entendu mettre en oeuvre un dispositif 1 très simple qui permettrait principalement ou exclusivement d'indiquer la profondeur (quasi-) instantanée à son porteur, à partir du moment où une immersion a été détectée par les moyens de détection de la présence d'eau selon l'invention.

De manière préférée, les moyens de détection de la présence d'eau sont également alimentés lorsque le dispositif 1 est dans le mode d'alimentation de plongée, avec la même fréquence d'alimentation que dans le mode de surface. Tant que le dispositif 1 reste immergé, les valeurs respectives des capacités des différents capteurs capacitifs ne varient pas beaucoup entre deux séries de mesures successives.

Toutefois, chacune de ces valeurs subit une nouvelle variation importante lorsque le dispositif 1 est sorti de l'eau, ce qui est détecté par l'unité de traitement de données 102, via le circuit de détection de la présence d'eau 22 et les mesures successivement stockées dans les zones mémoire 105 et 106. La détection d'une variation franchissant le seuil de déclenchement, cette nouvelle variation se faisant dans le sens inverse de celle ayant lieu au moment de l'entrée dans l'eau, de manière simultanée pour tous les capteurs capacitifs 20, ou une partie d'entre eux suivant le critère de validation retenu, conduit l'unité de traitement de données 102 à désactiver le mode d'alimentation de plongée pour activer le mode d'alimentation de surface.

Le procédé de détection de l'absence d'eau étant basé sur le même principe que celui décrit plus haut en relation avec la détection de la présence d'eau, il ne sera pas décrit plus en détail.

On peut noter que la description qui vient d'être faite en relation avec la figure 3 est également valable dans le cas de moyens de détection de la présence d'eau ne comprenant qu'un seul capteur capacitif 20. Les circuits électroniques 4 du dispositif 1 peuvent être réalisés à l'identique ou être simplifiés pour ne conserver que les éléments nécessaires. Dans ce cas, le multiplexeur 100 peut être supprimé et, les mémoires 105 et 106 peuvent être simplifiées pour ne comporter chacune qu'une seule adresse mémoire. Le fonctionnement des circuits électroniques 4 ainsi simplifiés reste similaire à ce qui a été décrit, c'est-à-dire basé sur un principe de mesures successives comparées.

Dans une variante de réalisation à un seul capteur capacitif, on peut prévoir que l'électrode correspondante présente une superficie sensiblement égale à la superficie de la surface interne de la glace. Dans ce cas, on peut ajuster le critère de validation de la détection de la présence d'eau en fonction d'une certaine proportion de la superficie de la glace recouverte. Ainsi, on peut prédéfinir un seuil de variation de la valeur de la capacité, correspondant par exemple à une couverture de 50 % de la superficie de la glace, à partir duquel l'unité de traitement de données considère que le dispositif électronique est en contact avec de l'eau.

D'autre part, on peut noter que le nombre de zones mémoire et leur mode de fonctionnement décrits ci-dessus ne sont pas limitatifs. On peut en effet prévoir un nombre de zones mémoire supérieur à deux pour permettre une comparaison de la dernière série de mesures avec plusieurs séries de mesures précédentes plutôt que simplement avec la dernière. Ainsi, on peut prévoir par exemple trois ou quatre zones mémoires dans lesquelles sont stockées successivement les séries de mesures de manière alternative, sans sortir du cadre du mode de réalisation qui vient d'être décrit.

De même, on peut prévoir une variante suivant laquelle quatre zones mémoire, par exemple, fonctionnent à la façon d'un registre à décalage, c'est-à-dire que la mémorisation d'une nouvelle série de mesures se fait toujours dans la première zone mémoire tandis que le contenu d'une zone mémoire de rang i est stocké dans la zone mémoire i+1. C'est ainsi que le contenu de la dernière zone mémoire, la quatrième dans le présent exemple, qui correspond à la série de mesures la plus ancienne est effacé pour être remplacé par le contenu de la troisième zone mémoire, ce dernier étant remplacé par le contenu de la seconde zone mémoire qui est lui-même remplacé par le contenu de la première zone mémoire. De cette manière, on peut prévoir que l'unité de traitement est programmée pour comparer simultanément la nouvelle série de mesures avec les trois séries de mesures précédentes, ce qui permet d'augmenter la fiabilité de la détection de la présence d'eau.

L'homme du métier ne rencontrera pas de difficulté particulière pour mettre en oeuvre le nombre de zones mémoire le mieux adapté dans son cas ainsi que leur fonctionnement, pour trouver le meilleur compromis entre l'espace occupé par les zones mémoire dans les circuits électroniques et la fiabilité de la détection de la présence d'eau.

Une alternative avantageuse pour le mode de réalisation dans lequel les moyens de détection de la présence d'eau comprennent une pluralité de capteurs capacitifs 20, consiste à attribuer une fonction supplémentaire d'organe de commande manuel aux capteurs capacitifs 20.

Dans ce cas, on prévoit la structure et le fonctionnement suivants, de manière avantageuse et non limitative.

Le dispositif comporte un organe de commande manuel 107 de type conventionnel, tel un bouton-poussoir, susceptible d'activer une commande spécifique au niveau de l'unité de traitement 102 lorsqu'il est actionné. Le dispositif comporte en outre une zone mémoire 108 supplémentaire comprenant au moins une adresse mémoire par capteur capacitif 20, donc représentée sur la figure 3 avec six adresses mémoires.

Il est également prévu qu'un mode de fonctionnement, ou une fonction, est associé à chacun des capteurs capacitifs et est activé en réponse à une action exercée sur le capteur capacitif correspondant, par l'apposition d'un doigt de l'utilisateur en regard de l'une des électrodes 5a à 5f. Dans ce but, les circuits électroniques peuvent éventuellement comporter une unité de gestion 109 des fonctions supplémentaires respectivement associées aux capteurs capacitifs.

De manière connue, on prévoit que la fonction d'organe de commande des capteurs capacitifs n'est pas active en permanence, pour des raisons évidentes de consommation électrique ainsi que pour éviter des activations intempestives des fonctions respectivement associées aux capteurs capacitifs.

Ainsi, l'unité de traitement de données 102 est réalisée de telle manière que la fonction d'organe de commande manuel des capteurs capacitifs 20 est activée en réponse à une action de l'utilisateur détectée sur l'organe de commande 107.

Dans ce but et pour permettre la détection de l'apposition d'un doigt de l'utilisateur sur l'un des capteurs capacitifs de manière fiable, on prévoit qu'en réponse à une action détectée sur l'organe de commande 107, l'unité de traitement de données 102 active les moyens de détection 20, 22, 100, pour mesurer successivement la capacité de chacun des capteurs capacitifs associés aux électrodes 5a à 5 f, via le multiplexeur 100. La première série de mesures ainsi obtenue est alors stockée dans la zone mémoire 108 pour constituer une série de référence, ce qui permet notamment de s'affranchir des problèmes susmentionnés de fluctuation au cours du temps des valeurs des capacités des capteurs 20.

De nouvelles séries de mesures sont ensuite effectuées de manière successive pendant une durée prédéfinie, préférablement de l'ordre de 20 secondes, pendant laquelle les moyens de détection sont alimentés en continu. Dans un même temps, chaque grandeur mesurée associée à un capteur capacitif 20 donné, tel qu'exposé plus haut, est comparée à la valeur de référence correspondante dans la zone mémoire 108.

Comme décrit précédemment, la méthode de comparaison employée est préférablement basée sur un calcul de taux de variation entre la mesure de référence et chaque nouvelle mesure. Lorsque le taux de variation calculé pour l'un des capteurs capacitifs 20 dépasse la valeur de seuil prédéfinie décrite précédemment au cours des mesures, le dépassement est interprété par l'unité de traitement de données 102 comme correspondant à un ordre d'activation de la fonction associée au capteur capacitif concerné. La fonction associée est alors activée soit directement par l'unité de traitement 102, soit par le biais de l'unité de gestion des fonctions supplémentaires 109, le cas échéant. De plus, des signaux électriques adaptés sont envoyés aux circuits de commande 104 des moyens d'affichage pour afficher des données relatives à la fonction nouvellement activée. Les fonctions susceptibles d'être mises en oeuvre dans le présent dispositif sont de tout type connu et conventionnel, tel que les fonctions chronographe, alarme, changement de fuseau horaire, ou encore thermomètre, boussole, altimètre, cette liste n'étant en aucun cas exhaustive ou limitative.

Comme mentionné plus haut, après une durée prédéfinie de l'ordre de 20 secondes, si aucune des grandeurs mesurées n'a franchi le seuil de déclenchement au moins une fois au cours des séries de mesures successives, l'unité de traitement 102 interrompt l'alimentation continue des moyens de détection 20, 22, 100.

Sur la base du fonctionnement particulier qui vient d'être décrit, on prévoit préférablement que les moyens de détection 20, 22, 100 assurent simultanément leur fonction de détection de la présence d'eau au contact du dispositif selon l'invention.

Dans ce but, il est prévu que l'unité de traitement de données 102 continue de calculer, sur la base du signal d'horloge, des intervalles de temps correspondant à la période définie plus haut en relation avec l'alimentation périodique des moyens de détection 20, 22, 100. En outre, l'unité de traitement 102 commande la mémorisation des séries de mesures ayant lieu sensiblement à chaque fin d'intervalle dans les zones mémoire 105 et 106 de manière alternée, le cas échéant, c'est-à-dire notamment dans le cas d'une période d'alimentation des moyens de détection fixée à moins de 20 secondes. De même, deux séries de mesures consécutives sont utilisées pour calculer le taux de variation de la grandeur mesurée pour chaque capteur capacitif et, le mode d'alimentation de plongée est activé en réponse à un franchissement du seuil de variation prédéfini pour tous les capteurs capacitifs ou une partie d'entre eux, de manière simultanée, tel que précédemment décrit.

De manière préférée, le fonctionnement des capteurs capacitifs 20 en tant qu'organes de commande manuels est interrompu dès lors que la présence d'eau au contact du dispositif a été détectée. De plus, dans le cas où une unité spécifique de gestion des fonctions supplémentaires 109 est prévue, elle est également désactivée lorsque la présence d'eau a été détectée.

On peut noter que des alternatives sont possibles en ce qui concerne le choix du critère de validation de la présence d'eau, ces alternatives étant bien entendu incluses dans l'enseignement de la présente invention. A titre d'exemple, dans le cas où les moyens de détection comportent une pluralité de capteurs capacitifs, on peut prévoir une étape de traitement supplémentaire des mesures de fréquence effectuées, avant d'effectuer le calcul des taux de variation. Cette étape de traitement supplémentaire peut être réalisée sous la forme d'un calcul de la moyenne des mesures obtenues au cours d'une série pour l'ensemble des capteurs capacitifs, deux moyennes calculées respectivement pour deux séries de mesures consécutives étant alors comparées l'une à l'autre, via un calcul du taux de variation correspondant, tel que décrit précédemment.

Ainsi, le critère de validation de la présence d'eau peut être défini par rapport à la valeur du taux de variation calculé pour la moyenne des fréquences respectivement associées aux capteurs capacitifs 20. Dans ce cas, il apparaît clairement que plus le dispositif comportera de capteurs capacitifs, plus la détection de la présence d'eau pourra être réalisée de manière fiable.

De manière alternative, on peut également prévoir de compléter le premier mode de réalisation décrit plus haut, basé sur le calcul du taux de variation de la fréquence pour chacun des capteurs capacitifs, en ajoutant une fonction de filtre à l'unité de traitement de données 102. En effet, on peut prévoir que si, dans une série de mesures donnée, un seul des capteurs capacitifs 20 est activé en raison d'un contact accidentel ou de l'utilisation de sa fonction d'organe de commande, l'unité de traitement remplace la nouvelle valeur de sa fréquence associée par la valeur de fréquence mémorisée lors de la série de mesure précédente, dans l'étape de mémorisation dans l'une des zones mémoire 105, 106.

Dans ce cas, le critère de validation de la présence d'eau mentionné plus haut basé sur une activation simultanée de tous les capteurs capacitifs est applicable, sans poser de problème de fiabilité au niveau de la détection de la présence d'eau.

Bien entendu, l'homme du métier ne rencontrera pas de difficulté particulière pour mettre en oeuvre d'autres moyens de comparaison équivalents à ceux qui viennent d'être décrits sans sortir du cadre de la présente invention.

En outre, la description qui précède s'attache à décrire des modes de réalisation particuliers à titre d'illustration non limitative et, l'invention n'est pas limitée, par exemple, au nombre ou aux emplacements décrits pour les capteurs capacitifs. On pourra en particulier prévoir de disposer un capteur capacitif au centre de la glace du dispositif, voire de disposer au moins un ou tous les capteurs capacitifs dans des régions différentes adéquates de l'ensemble formé par le boîtier et la glace du dispositif selon la présente invention.

**Revendications**

1. Dispositif (1) électronique portable comportant des moyens d'alimentation (8) pour alimenter des circuits électroniques (4) comprenant une unité de traitement de données (102), lesdits circuits électroniques (4) étant logés dans un ensemble formé d'un boîtier (2) fermé par une glace (3), le dispositif comportant en outre un capteur de pression (12) et des moyens de détection de la présence d'eau (20, 22, 100) susceptibles de produire des signaux électriques à destination de ladite unité de traitement de données (102), lesdits moyens de détection comportant au moins un capteur capacitif (20) comprenant un condensateur dont une armature est constituée par une électrode (5) agencée sur une région interne de l'ensemble boîtier-glace et dont la capacité (Cd) est susceptible de varier suite à une modification de nature du milieu extérieur situé directement au contact d'une région externe de l'ensemble boîtier-glace en regard de l'électrode (5), telle qu'une mise en contact de ladite région avec de l'eau, **caractérisé en ce que** ledit capteur de pression (12) fonctionne suivant au moins deux modes d'alimentation, un premier mode dit de surface et un second mode dit de plongée et **en ce que** lesdits moyens de détection (20, 22, 100) sont activés périodiquement pour effectuer des mesures d'une grandeur représentative de la valeur de la capacité dudit condensateur, lesdits circuits électroniques (4) comportant en outre des moyens (102, 105, 106) pour comparer au moins deux mesures successives de ladite grandeur et produire un signal électrique pour activer ledit mode d'alimentation de plongée en réponse à une variation de ladite capacité entre deux mesures successives de ladite grandeur supérieure à une valeur prédéfinie.

2. Dispositif selon la revendication 1, dans lequel ladite électrode (5) est transparente et ménagée sur la face interne de ladite glace (3), **caractérisé en ce que** ladite électrode présente une superficie sensiblement égale à la superficie de ladite face interne de la glace et **en ce que** ladite valeur prédéfinie correspond à la variation que subit ladite grandeur mesurée entre un premier milieu extérieur et un second milieu extérieur lorsque ledit second milieu extérieur entre en contact avec ladite glace (3) sur une superficie représentant une portion prédéfinie de la superficie de ladite électrode (5).

3. Dispositif (1) électronique portable comportant des moyens d'alimentation (8) pour alimenter des circuits électroniques (4) comprenant notamment une unité de traitement de données (102), lesdits circuits électroniques (4) étant logés dans un ensemble formé d'un boîtier (2) fermé par une glace (3), le dispositif comportant en outre un capteur de pression (12) et des moyens de détection de la présence d'eau (20, 22, 100) susceptibles de produire des signaux électriques à destination de ladite unité de traitement de données (102), **caractérisé en ce que** ledit capteur de pression (12) fonctionne suivant au moins deux modes d'alimentation, un premier mode dit de surface et un second mode dit de plongée et **en ce que** lesdits moyens de détection de la présence d'eau comportent au moins un premier et un second capteurs capacitifs (20) comprenant chacun un condensateur dont une armature est constituée par une électrode (5) agencée sur une région interne de l'ensemble boîtier-glace et dont la capacité (Cd) est susceptible de varier suite à une modification de nature du milieu extérieur situé directement au contact d'une région externe de l'ensemble boîtier-glace en regard de l'électrode (5), telle qu'une mise en contact de ladite région avec de l'eau, lesdits moyens de détection (20, 22, 100) étant activés périodiquement pour effectuer des mesures d'une première, respectivement d'une seconde, grandeur représentative de la valeur de la capacité dudit premier, respectivement dudit second, condensateur, lesdits circuits électroniques (4) comportant en outre des moyens pour comparer au moins deux mesures successives de ladite première grandeur, respectivement de ladite seconde grandeur, et produire un signal électrique pour activer ledit mode d'alimentation de plongée si les variations respectives desdites première et seconde grandeurs, entre deux mesures successives, sont simultanément supérieures à une valeur prédéfinie.

**4.** Dispositif selon la revendication 3, dans lequel lesdits moyens de détection comportent au moins trois capteurs capacitifs (20), **caractérisé en ce que** lesdits capteurs capacitifs sont disposés sensiblement régulièrement à proximité de la périphérie de ladite glace (3) et **en ce que** lesdits moyens de détection (20, 22, 100) produisent ledit signal d'activation dudit mode d'alimentation de plongée si au moins la moitié desdites grandeurs associées respectivement auxdits capteurs capacitifs (20) subissent simultanément des variations respectives, entre deux mesures successives, supérieures à ladite valeur prédéfinie.

**5.** Dispositif selon la revendication 3 ou 4, lesdits circuits électroniques (4) comprenant des moyens de multiplexage (100) pour effectuer, à chaque période d'activation desdits moyens de détection (20, 22, 100), une mesure par capteur capacitif (20) pour former une série de mesures desdites grandeurs respectivement associées auxdits capteurs capacitifs respectifs, deux séries de mesures successives étant mémorisées respectivement et alternativement dans une première et une seconde zones mémoire (105, 106) de manière à calculer après chaque série de mesures les variations respectives de chacune desdites grandeurs entre la dernière série de mesures et la série de mesures précédente.

**6.** Dispositif selon la revendication 3 ou 4, lesdits circuits électroniques (4) comprenant des moyens de multiplexage (100) pour effectuer, à chaque période d'activation desdits moyens de détection (20, 22, 100), une mesure par capteur capacitif (20) pour former une série de mesures desdites grandeurs respectivement associées auxdits capteurs capacitifs respectifs, ladite unité de traitement de données (102) étant susceptible de calculer les valeurs moyennes desdites séries de mesures respectivement associées auxdits capteurs capacitifs (20), lesdites valeurs moyennes étant mémorisées respectivement et alternativement dans une première et une seconde zones mémoire (105, 106) de manière à calculer après chaque série de mesures les variations respectives de chacune desdites valeurs moyennes entre la dernière série de mesures et la série de mesures précédente, ladite valeur prédéfinie étant définie relativement à la valeur moyenne d'une série de mesures.

**7.** Dispositif selon l'une quelconque des revendications précédentes, le dispositif (1) comportant au moins un organe de commande (107), de préférence du type bouton poussoir, lesdites électrodes (5) étant transparentes et ménagées sur la face interne de ladite glace (3), au moins un desdits capteurs capacitifs (20) étant en outre susceptible d'assurer une fonction d'organe de commande supplémentaire dans ledit mode surface en réponse à une action sur ledit organe de commande (107).

**8.** Dispositif selon l'une quelconque des revendications précédentes, lesdits moyens de détection comprenant notamment des moyens supplémentaires (24 à 27, 31) permettant de convertir un premier signal électrique dont l'amplitude dépend de la valeur de la capacité dudit ou de l'un desdits condensateurs en un second signal électrique périodique dont la fréquence dépend de ladite capacité et correspond à ladite grandeur mesurée.

**9.** Dispositif selon l'une quelconque des revendications précédentes, **caractérisé en ce que** ledit capteur de pression (12) effectue des mesures périodiques de la pression environnante, de préférence toutes les heures, dans ledit mode d'alimentation de surface, tandis qu'il mesure la pression environnante quasiment en temps réel dans ledit mode de plongée.

**10.** Procédé de détection de la présence d'eau au contact d'un dispositif (1) électronique portable comportant des moyens d'alimentation (8) pour alimenter des circuits électroniques (4) comprenant notamment une unité de traitement de données (102), lesdits circuits électroniques (4) étant logés dans un ensemble formé d'un boîtier (2) fermé par une glace (3), un capteur de pression (12) fonctionnant suivant au moins deux modes d'alimentation, un premier mode dit de surface et un second mode dit de plongée, le dispositif (1) comportant en outre des moyens de détection de la présence d'eau (20, 22, 100) susceptibles de produire des signaux électriques à destination de ladite unité de traitement de données (102), lesdits moyens de détection de la présence d'eau comportant au moins un capteur capacitif (20) comprenant un condensateur dont une armature (21) est constituée par une électrode (5) agencée sur une région interne de l'ensemble boîtier-glace et dont la capacité (Cd) est susceptible de varier suite à une modification de nature du milieu extérieur situé directement au contact d'une région externe de l'ensemble boîtier-glace en regard de l'électrode (5), telle qu'une mise en contact de ladite région avec de l'eau, lesdits moyens de détection (20, 22, 100) étant alimentés périodiquement pour effectuer des mesures d'une grandeur représentative de la valeur de la capacité dudit condensateur, le procédé comportant les étapes périodiques consistant à:

(a) mesurer la valeur de ladite grandeur;
(b) calculer, à chaque nouvelle mesure de ladite grandeur, la variation entre sa nouvelle valeur et la valeur précédente;

(c) activer le mode d'alimentation de plongée si ladite variation présente une valeur supérieure à une valeur prédéfinie ou, recommencer à l'étape (a) lors de la période suivante dans le cas contraire.

**11.** Procédé selon la revendication 10, **caractérisé en ce que** lesdits circuits électroniques (4) comprennent au moins deux zones mémoires (105, 106) permettant de mémoriser, à chaque période d'alimentation desdits moyens de détection (20, 22, 100), la valeur mesurée pour la grandeur représentative de la valeur de la capacité dudit condensateur, lesdites zones mémoires (105, 106) étant utilisées de manière alternative d'une période à la suivante pour permettre, après chaque nouvelle mesure de ladite grandeur, d'effectuer le calcul de la variation de ladite nouvelle valeur par rapport à la précédente.

**12.** Procédé selon la revendication 11, les moyens de détection comprenant n capteurs capacitifs (20), n étant au moins égal à deux, chacune desdites zones mémoire (105, 106) comprenant au moins n adresses mémoire, **caractérisé en ce que** le procédé comprend les étapes consistant à:

(a) mesurer, au cours d'une période d'alimentation desdits moyens de détection (20, 22, 100), la valeur de ladite grandeur pour chacun desdits n capteurs capacitifs de manière à former une série de n mesures;
(b) calculer, à chaque nouvelle série de mesures, chaque variation entre la nouvelle valeur de la grandeur relative à chacun desdits capteurs capacitifs (20) et la valeur correspondante précédente;
(c) activer le mode d'alimentation de plongée si au moins la moitié desdites n variations calculées à l'étape (b) présentent simultanément des valeurs respectives supérieures à une valeur prédéfinie ou, recommencer à l'étape (a) lors de la période suivante dans le cas contraire.

**13.** Procédé selon la revendication 11, les moyens de détection comprenant n capteurs capacitifs (20), n étant au moins égal à deux, **caractérisé en ce que** le procédé comprend les étapes consistant à:

(a) mesurer, au cours d'une période d'alimentation desdits moyens de détection (20, 22, 100), la valeur de ladite grandeur pour chacun desdits n capteurs capacitifs de manière à former une série de n mesures;
(b) calculer, à chaque nouvelle série de mesures, la valeur moyenne desdites n mesures obtenues;
(c) calculer chaque variation entre la nouvelle valeur de la moyenne calculée dans l'étape (b) et la valeur moyenne correspondant à la série de mesures précédente;
(d) activer le mode d'alimentation de plongée si la variation calculée à l'étape (c) présente une valeur supérieure à une valeur prédéfinie ou, recommencer à l'étape (a) lors de la période suivante dans le cas contraire.

**14.** Procédé selon la revendication 12 ou 13, lesdits moyens de détection comprenant des moyens de multiplexage (100) et des moyens (24 à 27, 31) pour convertir un premier signal électrique dont le niveau d'amplitude est représentatif de la valeur de la capacité d'un condensateur en un second signal électrique dont la fréquence est représentative de ladite valeur de capacité, ladite grandeur mesurée correspondant à une fréquence, une série de n mesures étant effectuée par utilisation desdits moyens de multiplexage (100).

**15.** Procédé selon l'une quelconque des revendications 10 à 14, **caractérisé en ce que** la période d'alimentation des moyens de détection (20, 22, 100) présente une valeur comprise entre environ 2 et 30 secondes, préférablement de l'ordre de 10 secondes.

**Claims**

**1.** Portable electronic device (1) including powering means (8) for powering electronic circuits (4) including a data processing unit (102), said electronic circuits (4) being housed in an assembly formed by a case (2) closed by a glass (3), the device further including a pressure sensor (12) and means for detecting the presence of water (20, 22, 100) capable of producing electric signals to be sent to said data processing unit (102), said detection means including at least one capacitive sensor (20) including a capacitor, one plate of which is formed by an electrode (5) arranged on an inner region of the case-glass assembly and whose capacitance (Cd) is capable of varying following a modification in nature of the external medium located directly in contact with an external region of the case-glass assembly opposite the electrode (5), such as said region coming into contact with water, **characterized in that** said pressure sensor (12) operates in at least two powering modes, a first called the surface mode and a second called the dive mode and **in that** said detection means (20, 22, 100) are periodically activated to carry out measurements of a quantity representative of the value of the capacitance of said capacitor, said electronic circuits (4) further including means (102, 105, 106) for comparing at least two successive measurements of said quantity and producing an electric signal for activating said dive powering mode in response to a variation in said capacitance between two successive measurements of said quantity higher than a predefined value.

2. Device according to claim 1, wherein said electrode (5) is transparent and arranged on the inner face of said glass (3), **characterized in that** said electrode has a surface area substantially equal to the surface area of said inner face of the glass and **in that** said predefined value corresponds to the variation that said measured quantity undergoes between a first external medium and a second external medium when said second external medium enters into contact with said glass (3) over a surface area representing a predefined portion of the surface area of said electrode (5).

3. Portable electronic device (1) including powering means (8) for powering electronic circuits (4) including, in particular, a data processing unit (102), said electronic circuits (4) being housed in an assembly formed by a case (2) closed by a glass (3), the device further including a pressure sensor (12) and means for detecting the presence of water (20, 22, 100) capable of producing electric signals to be sent to said data processing unit (102), **characterized in that** said pressure sensor (12) is capable of operating in at least two powering modes, a first called the surface mode and a second called the dive mode and **in that** means for detecting the presence of water include at least a first and a second capacitive sensor (20) each including a capacitor, one plate of which is formed by an electrode (5) arranged on an inner region of the case-glass assembly and whose capacitance (Cd) is capable of varying following a modification in nature of the external medium located directly in contact with an external region of the case-glass assembly opposite the electrode (5), such as said region coming into contact with water, said detection means (20, 22, 100) being periodically activated to carry out measurements of a first, respectively a second quantity representative of the value of the capacitance of said first, respectively said second capacitor, said electronic circuits (4) further including means for comparing at least two successive measurements of said first quantity, respectively said second quantity and producing an electric signal for activating said dive powering mode if the variations respectively in said first and second quantities, between two successive measurements, are simultaneously higher than a predefined value.

4. Device according to claim 3, wherein said detection means include at least three capacitive sensors (20), **characterized in that** said capacitive sensors are arranged substantially regularly in proximity to the periphery of said glass (3) and **in that** said detection means (20, 22, 100) produce said activating dive powering mode signal if at least half of said quantities associated respectively with said capacitive sensors (20) simultaneously undergo respective variations, between two successive measurements, higher than said predefined value.

5. Device according to claim 3 or 4, said electronic circuits (4) including multiplexing means (100) for carrying out, at each activation period of said detection means (20, 22, 100), one measurement per capacitive sensor (20) to form a series of measurements of said quantities respectively associated with said respective capacitive sensors, two successive series of measurements being stored alternately in a first and a second memory zone (105, 106) so as to calculate, after each series of measurements, the respective variations in each of said quantities between the last series of measurements and the preceding series of measurements.

6. Device according to claim 3 or 4, said electronic circuits (4) including multiplexing means (100) for carrying out, at each activation period of said detection means (20, 22, 100), one measurement per capacitive sensor (20) to form a series of measurements of said quantities respectively associated with the respective capacitive sensors, said data processing unit (102) being capable of calculating the mean values of said series of measurements respectively associated with said capacitive sensors (20), said mean values being stored respectively and alternately in a first and a second memory zone (105, 106) so as to calculate after each series of measurements the respective variations in each of said mean values between the last series of measurements and the preceding series of measurements, said predefined value being defined relative to the mean value of a series of measurements.

7. Device according to any one of the preceding claims, the device (1) including at least one control member (107), preferably of the push-button type, said electrodes (5) being transparent and arranged on the inner face of said glass (3), at least one of said capacitive sensors (20) being also capable of assuring an additional control member function in said surface mode in response to an action on said control member (107).

8. Device according to any one of the preceding claims, said detection means including, in particular, additional means (24 to 27, 31) for converting a first electric signal whose amplitude depends on the capacitance value of said capacitor(s) into a second periodic electric signal whose frequency depends on said capacitance and corresponds to said measured quantity.

9.  Device according to any one of the preceding claims, **characterized in that** said pressure sensor (12) carries out periodic measurements of the surrounding pressure, preferably every hour, in said surface powering mode, whereas it measures the surrounding pressure almost in real time in said dive mode.

10. Method for detecting the presence of water in contact with a portable electronic device (1) including powering means (8) for powering electronic circuits (4) including, in particular, a data processing unit (102), said electronic circuits (4) being housed in an assembly formed by a case (2) closed by a glass (3), a pressure sensor (12) operating in at least two powering modes, a first called the surface mode and a second called the dive mode, the device (1) further including detection means (20, 22, 100) capable of producing electric signals to be sent to said data processing unit (102), said means for detecting the presence of water including at least one capacitive sensor (20) including a capacitor, one plate (21) of which is formed by an electrode (5) arranged on an inner region of the case-glass assembly and whose capacitance (Cd) is capable of varying following a modification in the nature of the external medium located directly in contact with an external region of the case-glass assembly opposite the electrode (5), such as said region coming into contact with water, said detection means (20, 22, 100) being periodically activated to carry out measurements of a quantity representative of the value of the capacitance of said capacitor, the method including the periodic steps of:

    a) measuring the value of said quantity;
    b) calculating, at each new measurement of said quantity, the variation between its new value and the preceding value;
    c) activating the dive powering mode if said variation has a higher value than a predefined value or, if not, starting at step (a) again during the next period.

11. Method according to claim 10, **characterized in that** said electronic circuits (4) include at least two memory zones (105, 106) for storing, at each powering period of said detection means (20, 22, 100), the value measured for the quantity representative of the value of the capacitance of said capacitor, said memory zones (105, 106) being used alternately from one period to the next in order to allow, after each new measurement of said quantity, the calculation to be carried out of the variation in said new value with respect to the preceding one.

12. Method according to claim 11, the detection means including n capacitive sensors (20) n being at least equal to two, each of said memory zones (105, 106) including at least n memory addresses, **character-**

**ized in that** the method includes the steps of:

    a) measuring, during a powering period of said detection means (20, 22, 100), the value of said quantity for each of said n capacitive sensors so as to form a series of n measurements;
    b) calculating, at each new series of measurements, each variation between the new value of the quantity relating to each of said capacitive sensors (20) and the corresponding preceding value;
    c) activating the dive powering mode if at least half of said n variations calculated at step (b) simultaneously have respective values higher than a predefined value or, if not, starting at step (a) again during the next period.

13. Method according to claim 11, the detection means including n capacitive sensors (20), n being at least equal to two, **characterized in that** the method includes the steps of:

    a) measuring, during a powering period of said detection means (20, 22, 100), the value of said quantity for each of said n capacitive sensors so as to form a series of n measurements;
    b) calculating, at each new series of measurements, the mean value of said n measurements obtained;
    c) calculating each variation between the new value of the mean calculated in step (b) and the mean value corresponding to the preceding series of measurements;
    d) activating the dive powering mode if the variation calculated at step (c) has a higher value than a predefined value or, if not, starting at step (a) again during the next period.

14. Method according to claim 12 or 13, said detection means including multiplexing means (100) and means (24 to 27, 31) for converting a first electric signal whose amplitude level is representative of the value of the capacitance of a capacitor into a second electric signal whose frequency is representative of said capacitance value, said measured quantity corresponding to a frequency, a series of n measurements being carried out by using said multiplexing means (100).

15. Method according to any one of claims 10 to 14, **characterized in that** the powering period of the detection means (20, 22, 100) has a value comprised between around 2 and 30 seconds, preferably of the order of 10 seconds.

**Patentansprüche**

1. Tragbare elektronische Vorrichtung (1), die Versorgungsmittel. (8) aufweist, um elektronische Schaltungen (4) zu versorgen, die eine Datenverarbeitungseinheit (102) umfassen, wobei die elektronischen Schaltungen (4) in einer Baueinheit untergebracht sind, die aus einem durch ein Glas (3) verschlossenen Gehäuse gebildet ist, wobei die Vorrichtung außerdem einen Drucksensor (12) sowie Mittel (20, 22, 100) zum Erfassen des Vorhandenseins von Wasser, die elektrische Signale für die Datenverarbeitungseinheit (102) erzeugen können, umfasst, wobei die Erfassungsmittel wenigstens einen kapazitiven Sensor (20) umfassen, der einen Kondensator enthält, dessen Belegung durch eine Elektrode (5) gebildet ist, die in einem inneren Bereich der Gehäuse-Glas-Baueinheit angeordnet ist, und dessen Kapazität (Cd) sich infolge einer Änderung der Natur des äußeren Mediums, das mit einem äußeren Bereich der Gehäuse-Glas-Baueinheit gegenüber der Elektrode (5) in direktem Kontakt ist, etwa bei Herstellung eines Kontakts zwischen dem Bereich und Wasser, verändern kann, **dadurch gekennzeichnet, dass** der Drucksensor (12) wenigstens in zwei Versorgungsbetriebsarten arbeitet, wovon eine erste Oberflächen-Versorgungsbetriebsart genannt wird und eine zweite Tauch-Versorgungsbetriebsart genannt wird, und dass die Erfassungsmittel (20, 22, 100) periodisch aktiviert werden, um Messungen einer Größe vorzunehmen, die den Wert der Kapazität des Kondensators repräsentiert, wobei die elektronischen Schaltungen (4) außerdem Mittel (102, 105, 106) umfassen, um wenigstens zwei aufeinander folgende Messwerte der Größe zu vergleichen und um in Reaktion auf eine Veränderung der Kapazität zwischen zwei aufeinander folgenden Messwerten der Größe, die höher als ein im Voraus definierter Wert ist, ein elektrisches Signal zu erzeugen, um die Tauch-Versorgungsbetriebsart zu aktivieren.

2. Vorrichtung nach Anspruch 1, bei der die Elektrode (5) transparent ist und an der Innenfläche des Glases (3) ausgebildet ist, **dadurch gekennzeichnet, dass** die Elektrode einen Flächeninhalt besitzt, der im Wesentlichen gleich dem Flächeninhalt der Innenfläche des Glases ist, und dass der im Voraus definierte Wert der Veränderung entspricht, die die gemessene Größe zwischen einem ersten äußeren Medium und einem zweiten äußeren Medium erfährt, wenn das zweite äußere Medium mit dem Glas (3) auf einem Flächeninhalt in Kontakt tritt, der einen im Voraus definierten Abschnitt des Flächeninhalts der Elektrode (5) repräsentiert.

3. Tragbare elektronische Vorrichtung (1), die Versorgungsmittel (8) aufweist, um elektronische Schaltungen (4) zu versorgen, die insbesondere eine Datenverarbeitungseinheit (102) umfassen, wobei die elektronischen Schaltungen (4) in einer Baueinheit untergebracht sind, die aus einem durch ein Glas (3) verschlossenen Gehäuse (2) gebildet ist, wobei die Vorrichtung außerdem einen Drucksensor (12) und Mittel (20, 22, 100) zum Erfassen des Vorhandenseins von Wasser, die elektrische Signale für die Datenverarbeitungseinheit (102) erzeugen können, umfasst, **dadurch gekennzeichnet, dass** der Drucksensor (12) wenigstens in zwei Versorgungsbetriebsarten arbeitet, wovon eine erste Oberflächen-Versorgungsbetriebsart genannt wird und eine zweite Tauch-Versorgungsbetriebsart genannt wird, und dass die Mittel zum Erfassen des Vorhandenseins von Wasser wenigstens einen ersten und einen zweiten kapazitiven Sensor (20) aufweisen, die jeweils einen Kondensator enthalten, dessen Belegung durch eine Elektrode (5) gebildet ist, die in einem inneren Bereich der Gehäuse-Glas-Baueinheit angeordnet ist, und dessen Kapazität (Cd) sich infolge einer Änderung der Natur des äußeren Mediums, das mit einem äußeren Bereich der Gehäuse-Glas-Baueinheit gegenüber der Elektrode (5) in direktem Kontakt ist, etwa bei der Herstellung eines Kontakts zwischen dem Bereich und Wasser, verändern kann, wobei die Erfassungsmittel (20, 22, 100) periodisch aktiviert werden, um Messungen einer ersten bzw. einer zweiten Größe vorzunehmen, die den Wert der Kapazität des ersten bzw. des zweiten Kondensators repräsentiert, wobei die elektronischen Schaltungen (4) außerdem Mittel aufweisen, um wenigstens zwei aufeinander folgende Messwerte der ersten Größe bzw. der zweiten Größe zu vergleichen und um ein elektrisches Signal zum Aktivieren der Tauch-Versorgungsbetriebsart zu erzeugen, falls die jeweiligen Veränderungen der ersten bzw. der zweiten Grö-ße zwischen zwei aufeinander folgenden Messwerten gleichzeitig größer als ein im Voraus definierter Wert sind.

4. Vorrichtung nach Anspruch 3, bei der die Erfassungsmittel wenigstens drei kapazitive Sensoren (20) umfassen, **dadurch gekennzeichnet, dass** die kapazitiven Sensoren in der Umgebung des Umfangs des Glases (3) im Wesentlichen regelmäßig angeordnet sind und dass die Erfassungsmittel (20, 22, 100) das Signal für die Aktivierung der Tauch-Versorgungsbetriebsart erzeugen, wenn wenigstens die Hälfte der Größen, die den jeweiligen kapazitiven Sensoren (20) zugeordnet sind, gleichzeitig jeweils Veränderungen zwischen zwei aufeinander folgenden Messwerten erfahren, die größer als der im Voraus definierte Wert sind.

5. Vorrichtung nach Anspruch 3 oder 4, bei der die elektronischen Schaltungen (4) Multiplexermittel (100) umfassen, um in jeder Aktivierungsperiode der Erfassungsmittel (20, 22, 100) eine Messung mit dem kapazitiven Sensor (20) auszuführen, um eine Reihe von Messwerten der Größen, die den jeweiligen kapazitiven Sensoren zugeordnet sind, zu bilden, wobei zwei aufeinander folgende Reihen von Messwerten jeweils und abwechselnd in einer ersten bzw. einer zweiten Speicherzone (105, 106) gespeichert werden, derart, dass nach jeder Reihe von Messwerten die jeweiligen Veränderungen jeder der Größen zwischen der letzten Reihe von Messwerten und der vorhergehenden Reihe von Messwerten berechnet werden.

6. Vorrichtung nach Anspruch 3 oder 4, bei der die elektronischen Schaltungen (4) Multiplexermittel (100) umfassen, um in jeder Aktivierungsperiode der Erfassungsmittel (20, 22, 100) eine Messung durch einen kapazitiven Sensor (20) auszuführen, um eine Reihe von Messwerten der Größen zu bilden, die jeweils den entsprechenden kapazitiven Sensoren zugeordnet sind, wobei die Datenverarbeitungseinheit (102) die Mittelwerte der Reihen von Messwerten, die den jeweiligen kapazitiven Sensoren (20) zugeordnet sind, berechnen können, wobei die Mittelwerte jeweils und alternativ in einer ersten bzw. einer zweiten Speicherzone (105, 106) gespeichert werden, derart, dass nach jeder Reihe von Messwerten die jeweiligen Veränderungen jedes der Mittelwerte zwischen der letzten Reihe von Messwerten und der vorhergehenden Reihe von Messwerten berechnet wird, wobei der im Voraus definierte Wert relativ zu dem Mittelwert einer Reihe von Messwerten definiert ist.

7. Vorrichtung nach einem der vorhergehenden Ansprüche, wobei die Vorrichtung (1) wenigstens ein Steuerorgan (107), vorzugsweise vom Typ Druckknopf, aufweist, wobei die Elektroden (5) transparent sind und auf der Innenfläche des Glases (3) ausgebildet sind, wobei wenigstens einer der kapazitiven Sensoren (20) außerdem in Reaktion auf eine Aktion an dem Steuerorgan (107) eine Funktion als zusätzliches Steuerorgan in der Oberflächenbetriebsart gewährleisten kann.

8. Vorrichtung nach einem der vorhergehenden Ansprüche, bei der die Erfassungsmittel insbesondere zusätzliche Mittel (24 bis 27, 31) umfassen, die ermöglichen, ein erstes elektrisches Signal, dessen Amplitude von dem Wert der Kapazität des oder eines der Kondensatoren abhängt, in ein periodisches zweites elektrisches Signal umzusetzen, dessen Frequenz von der Kapazität abhängt und der gemessenen Größe entspricht.

9. Vorrichtung nach einem der vorhergehenden Ansprüche, **dadurch gekennzeichnet, dass** der Drucksensor (12) in der Oberflächen-Versorgungsbetriebsart periodische Messungen des umgebenden Drucks, vorzugsweise stündlich, ausführt, während er in der Tauch-Betriebsart den umgebenden Druck nahezu in Echtzeit misst.

10. Verfahren zum Erfassen des Vorhandenseins von Wasser in Kontakt mit einer tragbaren elektronischen Vorrichtung (1), die Versorgungsmittel (8) umfasst, um elektronische Schaltungen (4) zu versorgen, die insbesondere eine Datenverarbeitungseinheit (102) enthalten, wobei die elektronischen Schaltungen (4) in einer Baueinheit untergebracht sind, die aus einem durch ein Glas (3) verschlossenen Gehäuse (2) gebildet sind, wobei ein Drucksensor (12) in wenigstens zwei Versorgungsbetriebsarten arbeitet, wovon eine erste Oberflächen-Versorgungsbetriebsart genannt wird und eine zweite Tauch-Versorgungsbetriebsart genannt wird, wobei die Vorrichtung (1) außerdem Mittel (20, 22, 100) zum Erfassen des Vorhandenseins von Wasser umfasst, die elektrische Signale für die Datenverarbeitungseinheit (102) erzeugen können, wobei die Mittel zum Erfassen des Vorhandenseins von Wasser wenigstens einen kapazitiven Sensor (20) umfassen, der einen Kondensator enthält, dessen Belegung (21) durch eine in einem inneren Bereich der Gehäuse-Glas-Baueinheit angeordnete Elektrode (5) gebildet ist, und dessen Kapazität (Cd) sich infolge einer Änderung der Natur des äußeren Mediums, das mit einem äußeren Bereich der Gehäuse-Glas-Baueinheit gegenüber der Elektrode (5) in direktem Kontakt ist, etwa bei der Herstellung eines Kontakts zwischen dem Bereich und Wasser, verändern kann, wobei die Erfassungsmittel (20, 22, 100) periodisch versorgt werden, um Messungen einer Größe vorzunehmen, die den Wert der Kapazität des Kondensators repräsentiert, wobei das Verfahren die folgenden periodischen Schritte umfasst, die darin bestehen:

(a) den Wert der Größe zu messen;
(b) bei jeder neuen Messung der Größe die Veränderung zwischen ihrem neuen Wert und dem vorhergehenden Wert zu berechnen;
(c) die Tauch-Versorgungsbetriebsart zu aktivieren, falls die Veränderung einen Wert besitzt, der größer als ein im Voraus definierter Wert ist, oder im entgegengesetzten Fall den Schritt (a) in der folgenden Periode erneut auszuführen.

11. Verfahren nach Anspruch 10, **dadurch gekennzeichnet, dass** die elektronischen Schaltungen (4) wenigstens zwei Speicherzonen (105, 106) umfassen, die ermöglichen, in jeder Versorgungsperiode der Erfassungsmittel (20, 22, 100) den gemessenen Wert für die Größe, die den Wert der Kapazität des Kondensators repräsentiert, zu speichern, wobei die Speicherzonen (105, 106) von einer Periode zur nächsten abwechselnd verwendet werden, um zu ermöglichen, nach jeder neuen Messung der Größe die Berechnung der Veränderung des neuen Wertes in Bezug auf den vorhergehenden Wert auszuführen.

12. Verfahren nach Anspruch 11, bei dem die Erfassungsmittel n kapazitive Sensoren (20) umfassen, wobei n wenigstens gleich zwei ist, wobei jede der Speicherzonen (105, 106) wenigstens n Speicheradressen enthält, **dadurch gekennzeichnet, dass** das Verfahren die folgenden Schritte umfasst, die darin bestehen:

  (a) während einer Versorgungsperiode der Erfassungsmittel (20, 22, 100) den Wert der Größe für jeden der n kapazitiven Sensoren zu messen, derart, dass eine Reihe von n Messwerten gebildet wird;
  (b) in jeder neuen Reihe von Messwerten jede Veränderung zwischen dem neuen Wert der Größe in Bezug auf jeden der kapazitiven Sensoren (20) und dem entsprechenden vorhergehenden Wert zu berechnen;
  (c) die Tauch-Versorgungsbetriebsart zu aktivieren, falls wenigstens die Hälfte der im Schritt (b) berechneten n Veränderungen gleichzeitig Werte besitzen, die jeweils größer als ein im Voraus definierter Wert sind, oder im entgegengesetzten Fall den Schritt (a) in der folgenden Periode erneut auszuführen.

13. Verfahren nach Anspruch 11, bei dem die Erfassungsmittel n kapazitive Sensoren (20) umfassen, wobei n wenigstens gleich 2 ist, **dadurch gekennzeichnet, dass** das Verfahren die folgenden Schritte umfasst, die darin bestehen:

  (a) während einer Versorgungsperiode der Erfassungsmittel (20, 22, 100) den Wert der Größe für jeden der n kapazitiven Sensoren zu messen, derart, dass eine Reihe von n Messwerten gebildet wird;
  (b) in jeder neuen Reihe von Messwerten den Mittelwert der n erhaltenen Messwerte zu berechnen;
  (c) jede Veränderung zwischen dem neuen Wert des im Schritt (b) berechneten Mittelwerts und dem Mittelwert, der der vorhergehenden Reihe von Messwerten entspricht, zu berechnen;
  (d) die Tauch-Versorgungsbetriebsart zu aktivieren, falls die im Schritt (c) berechnete Veränderung einen Wert aufweist, der größer als ein im Voraus definierter Wert ist, oder im entgegengesetzten Fall den Schritt (a) in der folgenden Periode erneut auszuführen.

14. Verfahren nach Anspruch 12 oder 13, bei dem die Erfassungsmittel versehen sind mit Multiplexermitteln (100) und Mitteln (24 bis 27, 31) zum Umsetzen eines ersten elektrischen Signals, dessen Amplitudenpegel den Wert der Kapazität eines Kondensators repräsentiert, in ein zweites elektrisches Signal, dessen Frequenz den Wert der Kapazität repräsentiert, wobei die gemessene Größe einer Frequenz entspricht und wobei die n Messungen durch Verwenden der Multiplexermittel (100) ausgeführt werden.

15. Verfahren nach einem der Ansprüche 10 bis 14, **dadurch gekennzeichnet, dass** die Versorgungsperiode der Erfassungsmittel (20, 22, 100) einen Wert darstellt, der im Bereich von etwa 2 bis etwa 30 Sekunden, vorzugsweise in der Größenordnung von 10 Sekunden, liegt.

## Fig.1

## Fig.2

Fig. 3

EP 1 426 738 B1